# EUROPÄISCHE PATENTANMELDUNG

(11) **EP 0 902 351 A2**
(43) Veröffentlichungstag der Anmeldung: **17.03.1999**
(21) Anmeldenummer: 98202925.8
(22) Anmeldetag: 02.09.1998
(51) Int. Cl.: G06E 3/00, G06K 9/74

(54) **Verfahren und Anordnung zum Ermitteln von Abstandwerten zwischen Vektoren**

(30) Priorität: 11.09.1997 DE 19739909
(71) Anmelder: Philips Patentverwaltung GmbH, 22335 Hamburg (DE); Koninklijke Philips Electronics N.V., 5621 BA Eindhoven (NL)
(72) Erfinder: Rose, Georg, Dr., Röntgenstrasse 24, 22335 Hamburg (DE); Wendemuth, Andreas, Dr., Röntgenstrasse 24, 22335 Hamburg (DE)
(74) Vertreter: Peters, Carl Heinrich, Dipl.-Ing.

(57) **Zusammenfassung**

Bei der Mustererkennung müssen mehrdimensionale Testvektoren mit einer Vielzahl von Referenzvektoren verglichen und Abstandswerte erzeugt werden. Dies erfordert erheblichen Verarbeitungsaufwand und damit Rechenzeit. Um die Erzeugung der Abstandswerte zu beschleunigen, wird erfindungsgemäß vorgeschlagen, die Referenzvektoren als Referenzbilder holographisch in einem Kristall (7) zu speichern, wobei jeder Dimension ein bestimmter Bereich im Objektstrahl zugeordnet ist und für die Einspeicherung jedes neuen Referenzsignals der Winkel zwischen Objektstrahl (16) und Referenzstrahl (12) oder die Orientierung des Kristalls oder die Wellenlänge der Lichtquelle verändert wird. Während der Erkennung wird der Kristall (7) mit dem Testbild bestrahlt, und damit treten aus dem Kristall Lichtstrahlen (17) unter den beim Einspeichern den Referenzsignalen zugeordneten Orientierungen gleichzeitig bzw. bei der Verwendung verschiedener Wellenlängen nacheinander aus, wobei jeder Lichtstrahl die Übereinstimmung des Testvektors mit dem betreffenden Referenzvektor angibt. Daraus können mit geringem Aufwand und somit sehr schnell die für die Weiterverarbeitung in der Mustererkennung notwendigen Abstandswerte ermittelt werden. Eine besonders vorteilhafte Anwendung ist in der Spracherkennung.

## Beschreibung

Die Erfindung betrifft ein Verfahren zum Ermitteln von Abstandswerten aus dem Vergleich eines mehrdimesionalen Testvektors mit einer Anzahl Referenzvektoren gleicher Dimension für die Mustererkennung sowie eine entsprechende Anordnung.

Für viele Mustererkenungsverfahren ist es nicht nur erforderlich, den einem Testvektor ähnlichsten Referenzvektor zu ermitteln, sondern es müssen Abstandswerte für eine große Anzahl von Referenzvektoren bestimmt werden. Ein Beispiel für eine derartiges Mustererkennungsverfahren ist die Spracherkennung. Die weitere Beschreibung erfolgt daher hauptsächlich am Beispiel einer Spracherkennung, obwohl klar ist, daß die Beschreibung grundsätzlich auch für andere Mustererkennungsverfahren gilt.

Bei einer beispielsweise aus der EP 285 211 B1 (PHD 87-067) bekannten Spracherkennungsanordnung wird jedes aus einem Sprachsignal abgeleitete Testsignal mit einer Anzahl Referenzsignale verglichen, wobei die Signale mehrdimensionale Vektoren darstellen, und aus diesem Vergleich werden Abstandswerte abgeleitet, die ein Maß für den Abstand der Vektoren sind und aus denen viele Worthypothesen oder Satzhypothesen aufgebaut und fortgeführt werden. Da bei einem größeren Wortschatz sehr bald nach dem Anfang eines Sprachsignals eine große Anzahl von Hypothesen aktiv sind, muß jedes neue Testsignal mit einer entsprechend großen Anzahl von Referenzsignalen verglichen werden. Dabei umfassen die Referenzsignale und das Testsignal eine Anzahl Komponenten, die die Dimensionen der Vektoren angeben, so daß für jedes Referenzsignal ein Abstandswert in einem vieldimensionalen Raum berechnet werden muß. Dafür werden zunächst komponentenweise Partialabstände berechnet, aus denen dann der vollständige Abstand zwischen einem Testsignal und einem Referenzsignal berechnet wird. Diese Berechnungen erfordern bei einer Spracherkennungsanordnung für einen größeren Wortschatz eine sehr große Rechenzeit, so daß der größte Teil der gesamten Verarbeitungsschritte zwischen zwei aufeinanderfolgenden Testsignalen auf die Abstandsberechnung entfällt.

Aufgabe der Erfindung ist es, die für die Ermittlung der Abstandswerte zwischen einem Testvektor und einer Vielzahl von Referenzvektoren benötigte Zeit möglichst zu verkürzen.

Diese Aufgabe wird bei einem Verfahren zum Ermitteln von Abstandswerten grundsätzlich dadurch gelöst, daß die Speicherung der Referenzvektoren in Form von Referenzbildern auf holographische Weise in einem entsprechenden Speichermedium erfolgt und dieses Speichermedium mit einem aus dem Testvektor gebildeten Testbild beleuchtet wird. Aus den austretenden Lichtstrahlen können dann die Abstandswerte für die einzelnen gespeicherten Referenzsignale gebildet werden. Da aus dem Speichermedium bei entsprechender Speicherung der Referenzbilder die den einzelnen Referenzsignalen zugeordneten Lichtstrahlen gleichzeitig austreten, können die Abstandswerte für alle Referenzsignale weitgehend parallel, d.h. nahezu gleichzeitig ermittelt werden. Dadurch kann die zwischen zwei aufeinanderfolgenden Testsignalen zur Verfügung stehende Zeit weitgehend nur für die vollständige Verarbeitung der Abstandswerte verwendet werden, also im Falle der Spracherkennung für den Aufbau und die Fortführung von Hypothesen sowie die weiteren erforderlichen Verarbeitungsschritte.

Die holographische Speicherung einer großen Anzahl von Bildern oder Bitmustern in einem Kristall ist grundsätzlich bekannt, beispielsweise aus der Zeitschrift "Spektrum der Wissenschaft", Januar 1996, Seiten 50 bis 56. Darin ist auch der Vergleich eines aktuellen Testbildes mit einer Anzahl gespeicherter Referenzbilder beschrieben, wobei die Helligkeit der austretenden Strahlen proportional zum Grad der Ähnlichkeit des Testbildes mit jeweils einem gespeicherten Bild ist. Gemäß der vorliegenden Erfindung wird diese grundsätzlich bekannte Anordnung jedoch nicht zum Bestimmen einer allgemeinden Ähnlichkeit von Bildern, sondern zum Ermittlen des Abstands von mehrdimensionalen Mustervektoren angewendet.

Die Umsetzung von die Vektoren darstellenden Testsignalen oder Referenzsignalen in Testbilder bzw. Referenzbilder kann auf verschiedene Weise erfolgen. Nach einer vorteilhaften Ausgestaltung der Erfindung können die Werte der einzelnen Komponenten der Testsignale bzw. Referenzsignale die Intensität einzelner Bereiche des Lichtstrahls, die den Komponenten eindeutig zugeordnet sind, modulieren. In diesem Falle gibt die Intensität der aus dem Speichermedium austretenden Lichtstrahlen nahezu unmittelbar den Abstand zwischen dem Testvektor und dem einem Lichtstrahl zugeordneten Referenzvektor an, so daß die Abstandswerte für ein Testsignal und eine Anzahl Referenzsignale mit besonders geringem Aufwand bestimmt werden können.

Eine andere Möglichkeit zur Umsetzung von Testsignalen oder Referenzsignalen in die entsprechenden Bilder besteht darin, den einer Komponente zugeordneten Bereich in Unterbereiche zu unterteilen und jedem Unterbereich eine Stelle des mehrstelligen Werts der Komponente zuzuordnen. Bei der üblichen binären Darstellung ist dann ein Unterbereich abhängig vom Binärwert vollständig lichtdurchlässig oder ganz undurchlässig. Wenn die Größe der einzelnen Unterbereiche der Stellenwertigkeit der einzelnen Stelle entspricht, gibt auch hierbei die Intensität der aus dem Speichermedium austretenden Lichtstrahlen nahezu unmittelbar den Abstand zwischen Testvektor und Referenzvektor an.

Die holografische Speicherung der verschiedenen Referenzbilder kann im Kristall unter verschiedenen Winkeln bzw. Orientierungen, an verschiedenen Kristallorten oder auch mit verschiedenen Wellenlängen erfolgen. Im ersteren Fall wird der Winkel des Referenzlichtstrahls oder die Lage des Kristalls verändert, d.h. verschoben oder gedreht oder auch beides. Bei der Speicherung mit unterschiedlicher Wellenlänge ist ein Laser erforderlich, der kohärentes Licht mit einstellbar unterschiedlicher Wellenlänge erzeugt, beispielsweise ein durchstimmbarer Laser.

Eine Anordnung zum Ermitteln von Abstandswerten aus dem Vergleich eines Testsignals mit einer Anzahl Referenzsignale für eine Spracherkennungsanordnung verwendet einen Laser, einen Lichtmodulator und ein Speichermedium, in dem die Referenzsignale als Referenzbilder holographisch gespeichert sind. Der Lichtmodulator wird mit dem Testsignal angesteuert, und eine optische Aufnahmeanordnung wandelt die aus dem Speichermedium austretenden Strahlen in elektrische Signale um, die in einer Auswerteanordnung in Abstandswerte umgewandelt und nacheinander für verschiedene Referenzsignale abgegeben werden.

Ausführungsbeispiele der Erfindung werden nachfolgend anhand der Zeichnung näher erläutert. Es zeigen
Fig. 1 schematisch eine Anordnung zum Einspeichern von Referenzsignalen in einen holographischen Speicher,
Fig. 2 schematisch eine Anordnung zum Vergleichen eines Testsignals mit holographisch gespeicherten Referenzsignalen und zum Bilden der Abstandswerte.

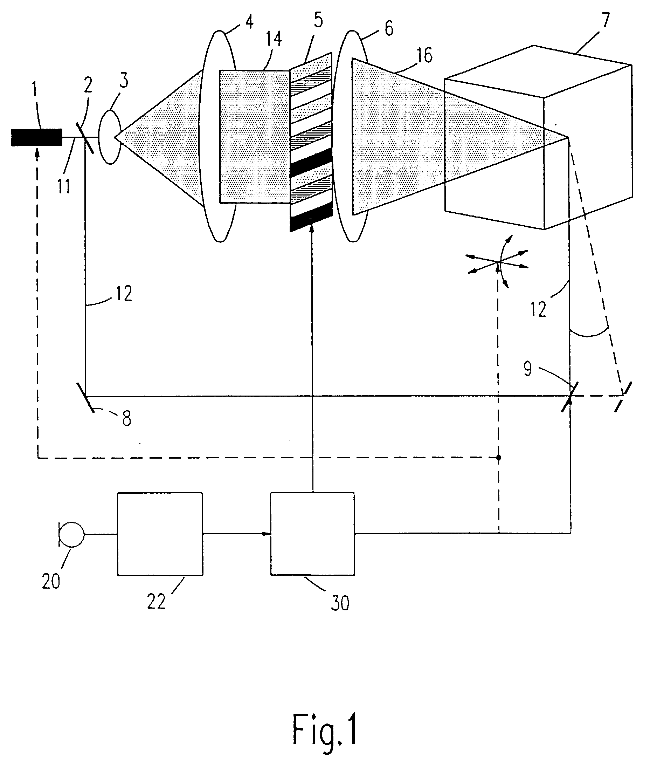

In Fig. 1 wird der Lichtstrahl 11 eines Lasers 1 über einen Strahlenteiler 2 in einen Referenzstrahl 12 und einen Strahl aufgeteilt, der über die Linsen 3 und 4 als aufgeweiteter Lichtstrahl 14 auf einen symbolisch angedeuteten Lichtmodulator 5 fällt. Der Lichtmodulator 5 wird von einer Verarbeitungsanordnung 30 angesteuert. Diese erzeugt Vektoren darstellende Referenzsignale und erhält dafür in diesem Beispiel der Spracherkennung Signale von einer Anordnung 22, die von einem Mikrofon 20 aufgenommene Trainings-Sprachsignale periodisch abtastet, digitalisiert und in Komponenten zerlegt. Ein Verfahren zur Bildung von Referenzwerten ist beispielsweise aus der DE 195 16 106 A1 (PHD 95-040) bekannt. Die Referenzsignale werden von der Verarbeitungseinheit 30 nacheinander dem Lichtmodulator 5 zugeführt, der hier beispielsweise in eine Anzahl Bereiche aufgeteilt ist, wobei jeder Bereich einer Komponente der Referenzsignale fest zugeordnet ist. Die Bereiche sind hier als parallele Streifen angegeben, jedoch ist es klar, daß die den einzelnen Komponenten zugeordneten Bereiche auch andere Formen haben können, beispielsweise in einer Matrix angeordnete quadratische Bereiche. Eine solche Matrix aus Unterbereichen in jedem Bereich ist besonders zweckmäßig, wenn jede Komponente digital mit mehreren Stellen dargestellt ist, wobei jeder Stelle einer Komponente ein bestimmter Unterbereich mit einer der Wertigkeit der Stelle entsprechenden Größe zugeordnet ist. Wesentlich ist lediglich, daß jeder Komponente der Referenzsignale ein bestimmter Bereich eindeutig zugeordnet ist. Der Lichtmodulator moduliert den aufgeweiteten Lichtstrahl 14 entsprechend den Werten der einzelnen Komponenten bzw. der einzelnen Stellen der Komponentenwerte des jeweils zugeführten Referenzsignals, was in Fig. 1 durch unterschiedliche Grautönungen der einzelnen Bereiche für den Fall, daß der Wert jeder Komponente direkt die Intensität steuert, angedeutet ist. Der vom Lichtmodulator 5 modulierten Lichtstrahl 16 wird über eine Linse 6 auf einen Kristall 7 fokussiert, der aus einem bekannten Material wie beispielsweise Lithiumniobat besteht.

Der vom Strahlenteiler 2 kommende Referenzstrahl 12 wird über einen Spiegel 8 und einen Spiegel 9 ebenfalls auf den Kristall 7 gerichtet. An dem Schnittpunkt des Referenzstrahls 12 mit dem von der Linse 6 fokussierten modulierten Lichtstrahl 16 im Kristall 7 entsteht ein Interferenzbild, das im Kristall 7 an dieser Stelle gespeichert wird. Ein weiteres Referenzsignal kann als weiteres Referenzbild an dieser Stelle gespeichert werden, wenn der Lichtmodulator 5 mit diesem Referenzsignal angesteuert und der Spiegel 9 verändert wird, so daß der Referenzstrahl 12 in einem anderen Winkel auf den Kristall 7 trifft. Der Spiegel 9 wird daher ebenfalls von der Verarbeitungsanordnung 30 angesteuert, und zwar für jedes neue Referenzsignal auf einen anderen Winkel des Referenzstrahls 12, wie in Fig. 1 gestrichelt angedeutet ist, wobei jedem Referenzsignal eindeutig ein bestimmter Winkel zugeordnet ist.

Eine andere Möglichkeit, die Referenzbilder in unterschiedlicher Orientierung bzw. an unterschiedlichen Orten im Kristall 7 zu speichern, besteht darin, den Kristall 7 für jedes neue Referenzbild in der Lage zu verändern, also vorwärts bzw. rückwärts oder seitwärts zu verschieben oder zu drehen, wobei diese Bewegungen auch kombiniert angewendet werden können. Dies erfolgt ebenfalls durch Signale von der Verarbeitungsanordnung 30, wie in Fig. 1 gestrichelt angedeutet ist. Schließlich kann der Laser 1 auch so aufgebaut sein, so daß er auf verschiedene Wellenlängen des erzeugten Lichts einstellbar ist, und er wird dann für jedes neue Referenzbild auf eine andere Wellenlänge eingestellt. Auf diese Weise wirkt der Kristall 7 als Speichermedium für die Referenzsignale und ist damit vorbereitet, für die Ermittlung der Abstandswerte der Referenzsignale zu einem Testsignal zu dienen.

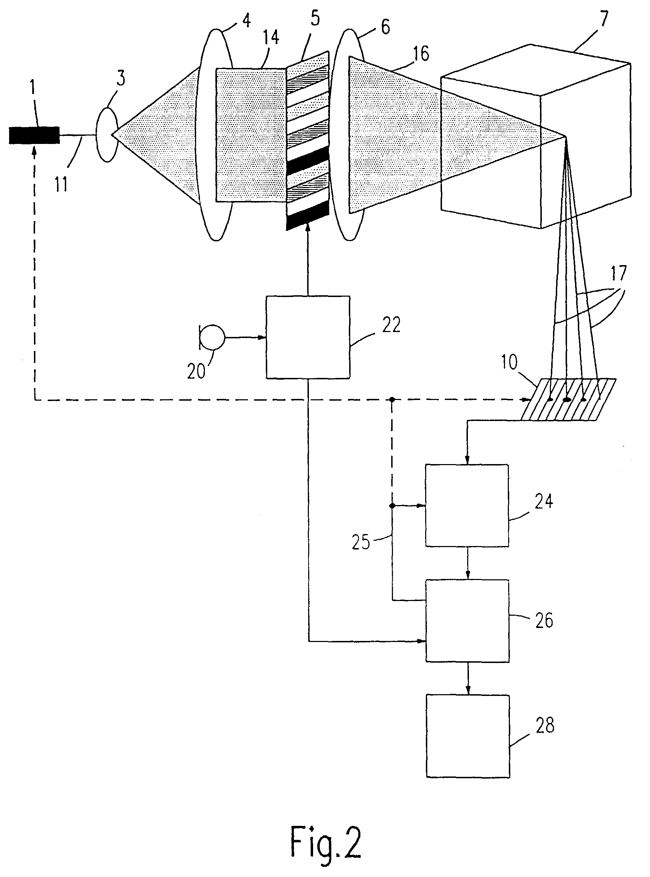

Diese Ermittlung der Abstandswerte ist in Fig. 2 näher dargestellt. Der gesamte Lichtstrahl 11 des Lasers 1 wird hier durch die Linsen 3 und 4 aufgeweitet und auf den Lichtmodulator 5 gerichtet. Dieser Lichtmodulator wird nun direkt von der Anordnung 22 angesteuert, die das über das Mikrofon 20 aufgenommene Sprachsignal zu wiederholten Zeitpunkten abtastet und jeden Abtastwert digitalisiert und in seine Komponenten zerlegt. Jeder auf diese Weise zerlegte Abtastwert des Sprachsignals stellt ein Testsignal dar. Die einzelnen Komponentenwerte des Testsignals modulieren in gleicher Weise dieselben Bereiche des aufgeweiteten Lichtstrahls 14 wie bei den Referenzsignalen.

Der modulierte Lichtstrahl 16 wird nun wieder auf dieselbe Stelle des Kristalls 7 gerichtet, an der die die Referenzsignale darstellenden Referenzbilder gespeichert sind. Da ein Testsignal nur sehr selten vollständig mit einem Referenzsignal übereinstimmt, treten bei Bestrahlung des Kristalls 7 mit dem vom Testsignal modulierten Lichtstrahl 16, wenn die einzelnen Referenzbilder in verschiedener Orientierung oder unterschiedlichen Orten im Kristall 7 gespeichert sind, mehrere Strahlen 17 unter verschiedenen Winkeln aus. Wenn die einzelnen Referenzbilder mit verschiedenen Wellenlängen gespeichert wurden, muß der Laser 1 ebenfalls nacheinander auf die verschiedenen Wellenlängen eingestellt werden, und es tritt nur ein Strahl mit der entsprechenden Wellenlänge aus dem Kristall 7 aus. Die Intensität des bzw. jedes Strahls gibt ein Maß für den Abstandswert des zugehörigen Referenzsignals an.

Wenn mehrere Lichtstrahlen 17 aus dem Kristell 7 austreten, werden diese nun parallel von einer optischen Aufnahmeanordnung 10 aufgenommen und in elektrische Signale umgesetzt. Dazu besteht die Aufnahmeanordnung 10 beispielsweise aus einer Zeile oder einer Matrix von lichtempfindlichen Zellen, abhängig davon, ob bei der Einspeicherung der Referenzsignale der Winkel des Referenzstrahls 12 in einer oder zwei Dimensionen verändert worden ist. Eine andere Möglichkeit besteht auch darin, die optische Aufnahmeanordnung 10 als CCD-Bildaufnehmer auszuführen.

Die von der Aufnahmeanordnung 10 erzeugten elektrischen Signale werden in einer Anordnung 24 in Abstandswerte umgesetzt, die einer Erkennungsanordnung 26 zugeführt werden. Diese verarbeitet die Abstandswerte der einzelnen Referenzsignale nacheinander, so daß die Anordnung 24 die elektrischen Signale von der Aufnahmeanordnung 10 nacheinander auswählen muß. Dafür wird die Anordnung 24 auch von der Erkennungsanordnung 26 über die Verbindung 25 angesteuert. Falls die Aufnahmeanordnung 10 als eindimensionale oder zweidimensionale CCD-Anordnung ausgeführt ist, wird diese über die Verbindung 25 angesteuert, wie durch die gestrichelte Linie angedeutet ist. Wenn die Referenzbilder mit unterschiedlichen Wellenlängen gespeichert sind, wird der Laser 1 nacheinander auf diese Wellenlängen eingestellt, wie in Fig. 2 gestrichelt dargestellt ist, und der einzige austretende Strahl wird von nur einer Aufnahmeanordnung in ein elektrisches Signal umgesetzt, wobei die nacheinander auftretenden Signale der Erkennungsanordnung 26 als Abstandswert für das der betreffenden Wellenlänge zugeordnete Referenzsignal zugeführt werden.

In allen Fällen verwendet die Erkennungsanordnung 26 dann die nacheinander eintreffenden Abstandswerte, um Worthypothesen oder Satzhypothesen aufzubauen und fortzusetzen. Außerdem erhält die Erkennungsanordnung 26 von der Anordnung 22 mit jedem neuen Abtastwert ein Signal zur Synchronisierung mit dieser Abtastung. Die gebildeten Hypothesen führen schließlich zu wenigstens einer Folge von erkannten Wörtern, die auf einer Ausgabeanordnung 28, beispielsweise einem Bildschirm, ausgegeben werden.

Als Lichtmodulator 5 wird zweckmäßig ein LCD-Schirm eingesetzt, dessen Pixel bzw. Pixelgruppen von den Werten der Komponenten des Testsignals bzw. der Referenzsignale in ihrer Transparenz gesteuert werden. Je nach erforderlichem Abstandsmaß können die Werte der Komponenten statt in Intensitätsstufen auch anders kodiert abgebildet werden. Im speziellen Fall einer binären Kodierung entsteht aus jedem Vektor eine Lichtintensitätsmatrix.

## Patentansprüche

1. Verfahren zum Ermitteln von Abstandswerten aus dem Vergleich eines mehrdimensionalen Testvektors mit einer Anzahl Referenzvektoren gleicher Dimension für eine Mustererkennungsanordnung, wobei der Testvekor mit Hilfe einer kohärenten Lichtquelle und eines Lichtmodulators in ein Testbild umgesetzt wird, in dem verschiedene Bereiche unterschiedliche Intensität entsprechend dem Wert von den einzelnen Dimensionen zugeordneten Komponenten aufweisen und mit dem ein Speichermedium beleuchtet wird, in dem die Referenzvektoren als Referenzbilder holographisch durch Beleuchtung mit einem Referenzlichtstrahl und je einem der in gleicher Weise wie das Testbild erzeugten Referenzbilder gespeichert sind, und wobei aus den aus dem Speichermedium austretenden Lichtstrahlen die Abstandswerte für die Referenzsignale abgeleitet werden.

2. Verfahren nach Anspruch 1, wobei der Wert jeder Komponente in die Intensität des von der kohärenten Lichtquelle ausgesandten Lichts an einem der betreffenden Komponente zugeordneten Bereich des Testbildes und der Referenzbilder umgesetzt wird.

3. Verfahren nach Anspruch 1, wobei der Wert jeder Komponente digital mit mehreren Stellen dargestellt ist und der Wert jeder Stelle in die Intensität des von der kohärenten Lichtquelle ausgesandten Lichts an einem dieser Stelle zugeordneten Unterbereich mit einer der Wertigkeit dieser Stelle zugeordneten Größe in einem der betreffenden Komponente zugeordneten Bereich des Testbildes und der Referenzbilder umgesetzt wird.

4. Verfahren nach einem der Ansprüche 1 bis 3, wobei die Referenzbilder in einer für jedes Referenzbild anderen Orientierung im Speichermedium gespeichert sind, indem beim Beleuchten mit den Referenzbildern der Winkel zwischen Referenzlichtstrahl und jedem der Referenzbilder unterschiedlich gewählt ist und beim Beleuchten mit dem Testbild aus den aus dem Speichermedium unter verschiedenen Winkeln austretenden Lichtstrahlen die Abstandswerte für die den Winkeln zugeordneten Referenzvektoren abgeleitet werden.

5. Verfahren nach einem der Ansprüche 1 bis 3, wobei die Referenzbilder an einem für jedes Referenzbild anderen Ort im Speichermedium gespeichert ist, indem für jedes der Referenzbilder beim Beleuchten die Lage des Speichermediums verändert ist und beim Beleuchten mit dem Testbild aus den aus dem Speichermedium unter verschiedenen Orientierungen austretenden Lichtstrahlen die Abstandswerte für die den Orientierungen zugeordneten Referenzvektoren abgeleitet werden.

6. Verfahren nach einem der Ansprüche 1 bis 3, wobei die Referenzbilder mit für jedes Referenzbild anderer Wellenlänge des Lichts der kohärenten Lichtquelle gespeichert werden und beim Beleuchten mit dem Testbild die Wellenlänge des Lichts der kohärenten Lichtquelle nacheinander auf die den Referenzbildern zugeordneten Wellenlängen eingestellt und für jede Wellenlänge aus dem aus dem Speichermedium austretenden Lichtstrahl der Abstandswert für den dieser Wellenlänge zugeordneten Referenzvektor abgeleitet wird.

7. Anordnung zum Ermitteln von Abstandswerten aus dem Vergleich eines mehrdimensionalen Testvektors mit einer Anzahl Referenzvektoren gleicher Dimension für eine Mustererkennungsanordnung, mit
einer kohärenten Lichtquelle (1),
einem Lichtmodulator (5),
einem Speichermedium (7) mit einer Anzahl darin holographisch gespeicherten Referenzbildern, die aus den Referenzvektoren durch Beleuchtung des Speichermediums mit vom Lichtmodulator (5), der nacheinander von einem anderen der Referenzvektoren gesteuert ist, modulierten Lichtstrahlen (16) des Lasers und einem Referenzstrahl (12) erzeugt sind,
einer Anordnung (22) zur Ansteuerung des Lichtmodulators (5) mit dem Testsignal, einer optischen Aufnahmeanordnung (10) zum getrennten Aufnehmen von gleichzeitig aus dem Speichermedium (7) austretenden Strahlen und zur Erzeugung von elektrischen Signalen daraus,
eine Auswerteanordnung (24) zum Umsetzen der elektrischen Signale in nacheinander für verschiedene Referenzvektoren abgegebene Abstandswerte.
